# EUROPEAN PATENT APPLICATION

(11) **EP 4 475 424 A1**
(43) Date of publication of application: **11.12.2024**
(21) Application number: 24174519.9
(22) Date of filing: 07.05.2024
(51) Int. Cl.: H02M 7/5388, H02M 7/219, H02M 1/32, H02M 5/458, H02H 9/02, H02M 7/5387

(54) **POWER ELECTRONICS CONVERTER**

(30) Priority: 07.06.2023 GB 202308462
(71) Applicant: Rolls-Royce plc, London N1 9FX (GB)
(72) Inventor: Trainer, David R, Derby, DE24 8BJ (GB); Sweet, Mark, Derby, DE24 8BJ (GB)
(74) Representative: Rolls-Royce plc

(57) **Abstract**

The disclosure relates to power electronics converters having circuit breaker protection for use in case of faults. Example embodiments include a power electronics converter (600) for converting an input AC supply (601) having a plurality of phases to an output DC supply (602), the converter comprising: a plurality of AC input terminals (603a-c) connectable to the plurality of phases of the AC supply (601); first and second DC output terminals (604, 605); a capacitor (609) connected between the first and second DC output terminals (604, 605); a first MOSFET (606a-c) connected between each of the plurality of AC input terminals (603a-c) and the first DC output terminal (604); a second MOSFET (607a-c) connected between each of the plurality of AC input terminals (603a-c) and the second DC output terminal (605); and a third MOSFET (608a-c) reverse connected in series with the first MOSFET (606a-c) between the first DC output terminal (604) and each of the plurality of AC input terminals (603a-c).

## Description

### TECHNICAL FIELD

The disclosure relates to power electronics converters having circuit breaker protection for use in case of faults.

### BACKGROUND

In aerospace, the more electric engine (MEE) and more electric aircraft (MEA) concepts are seen as being increasingly attractive due to their potential to reduce fuel consumption. Such aircraft generally require a high voltage DC electrical network, operating with a DC bus voltage of for example around 270V or 540V. Power electronics converters are used to convert between the DC supply on the DC electrical network and AC supplies for electrical machines and DC supplies for battery storage. Such converters may be employed in safety critical applications, for example in starter-generators for gas turbine engines, oil pumps, fuel pumps and electrical actuation systems. Safety and reliability of such converters is therefore of critical importance. Power electronics converters may also be used in electrical or hybrid propulsion systems in land or sea applications, in which safety and reliability is also important but where weight may be less of a critical factor.

High power aircraft electrical systems currently being developed include rotating permanent magnet generators and motors in combination with AC to DC power electronic converters. These systems are required to be tolerant of DC networks faults and should safely disconnect the faulted part of the system to enable the flight to continue.

An AC to DC converter may be used to short-circuit a connected electrical machine by connecting the AC terminals of the electrical machine together using existing semiconductor switches. This approach effectively starves the fault site of current, enabling interruption at zero or at a significantly reduced level of fault current using a simple contactor, which avoids arcing and prolongs the life of the contactors. Such an approach is suited to electrical generation where high impedance permanent magnet machines are used, which limit the absolute value of fault current.

Other proposed approaches include the use of solid-state circuit breakers (SSCBs) in the form of bidirectional semiconductor switches connected in either the AC lines or DC lines of an AC-DC converter. These switches are required to conduct current in both directions and support a blocking voltage in both directions, i.e. positive and negative, without suffering the problem of uncontrolled diode conduction. A typical approach is to connect transistors in a reverse-series configuration to form an AC switch when required.

SSCB protection offers a fast and reliable alternative, but requires significant hardware that effectively introduces an additional power electronic converter into the power system. Each SSCB contains components including semiconductors, gate-drivers, a control system, power supplies, voltage suppression devices and heatsinks. In addition, the SSCB suffers from relatively high insertion power losses by virtue of requiring two semiconductor devices which continuously conduct the full AC side or DC side current in normal operation and thereby contribute additional conduction losses, reducing efficiency of the converter. SSCBs also increase the size, weight and cost of the electrical power system and reduce the overall efficiency and reliability, particular where multiple SSCBs are required.

### SUMMARY

According to a first aspect there is provided a power electronics converter for converting an input AC supply having a plurality of phases to an output DC supply, the converter comprising:
a plurality of AC input terminals connectable to the plurality of phases of the input AC supply;
first and second DC output terminals;
a first MOSFET connected between each of the plurality of AC input terminals and the first DC output terminal;
a second MOSFET connected between each of the plurality of AC input terminals and the second DC output terminal; and
a third MOSFET reverse connected in series with the first MOSFET between the first DC output terminal and each of the plurality of AC input terminals.

The above arrangement of power electronics converter retains the advantages of using reverse series-connected SSCBs while reducing the additional hardware required and reducing the loss of efficiency.

The power electronics converter may further comprise a switching controller configured to provide switching signals to gates of each of the first, second and third MOSFETs, wherein the controller is configured to operate in a first mode in which pulse width modulated switching signals are provided to the gates of the first and second MOSFETs to convert an AC supply at the AC input terminals to a DC output supply at the DC output terminals while the third MOSFETs are switched on.

The controller may be configured to operate in a second mode during a fault condition in which the first and third MOSFETs are switched off.

A source of each of the first MOSFETs may be connected to a respective one of the AC input terminals.

A source of each of the second MOSFETs may be connected to the second DC output terminal and a drain of each of the second MOSFETs connected to a respective one of the AC input terminals.

A source of each of the third MOSFETs may be connected to the first DC output terminal and a drain of each of the third MOSFETs connected to a drain of a respective one of the first MOSFETs.

The power electronics converter may further comprise: a fourth MOSFET reverse connected in series with the second MOSFET between the second DC output terminal and each of the plurality of AC input terminals.

The first MOSFET, second MOSFET and third MOSFET may be SiC MOSFETs or GaN MOSFETs. According to a second aspect there is provided a power electronics converter for converting an input AC supply having a plurality of phases to an output DC supply, the converter comprising:
a plurality of AC input terminals connectable to the plurality of phases of the input AC supply;
first and second DC output terminals;
a first MOSFET connected between each of the plurality of AC input terminals and the first DC output terminal;
a second MOSFET connected between each of the plurality of AC input terminals and the second DC output terminal; and
a third MOSFET connected between the second DC output terminal and in reverse series with each of the first MOSFETs.

The third MOSFET may be located between the capacitor and the first MOSFETs.

The power electronics converter may further comprise a switching controller configured to provide switching signals to gates of each of the first, second and third MOSFETs, wherein the controller is configured to operate in a first mode in which pulse width modulated switching signals are provided to the gates of the first and second MOSFETs to convert an AC supply at the AC input terminals to a DC output supply at the DC output terminals while the third MOSFET is switched on.

The controller may be configured to operate in a second mode during a fault condition in which the first and third MOSFETs are switched off.

The second MOSFETs may also be switched off in the second mode.

A source of each of the first MOSFETs may be connected to a respective one of the AC input terminals.

A source of each of the second MOSFETs may be connected to the second DC output terminal and a drain of each of the second MOSFETs connected to a respective one of the AC input terminals.

A source of the third MOSFET may be connected to the first DC output terminal and a drain of third MOSFET connected to drains of the first MOSFETs.

The AC supply for the first or second aspects may comprise three or more phases.

The first MOSFET, second MOSFET and third MOSFET may be SiC MOSFETs or GaN MOSFETs.

According to a third aspect, there is provided an electrical power system comprising:
an electrical machine having a plurality of phases;
a power electronics converter according to the first or second aspect, the plurality of AC input terminals of which are connected to the plurality of phases of the electrical machine.

According to a fourth aspect there is provided an aircraft power and propulsion system comprising:
a gas turbine engine; and
an electrical power system comprising an electrical machine and a power electronics converter according to the first or second aspects,
wherein the electrical machine of the electrical power system is mechanically coupled with a spool of the gas turbine engine.

According to a fifth aspect there is provided an aircraft comprising the power and propulsion system according to the third aspect. The aircraft may be a hybrid electric aircraft.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### BRIEF DESCRIPTION OF THE DRAWINGS

Embodiments will now be described by way of example only with reference to the accompanying drawings, which are purely schematic and not to scale, and in which:
**Figure 1** shows a general arrangement of a turbofan engine for an aircraft;
**Figure 2A** is a schematic illustration of a hybrid electric aircraft propulsion system;
**Figure 2B** illustrates an electrically powered propulsor such as may be used in a hybrid electric propulsion system;
**Figure 3** is a schematic diagram of an example power electronics converter;
**Figure 4** is a schematic diagram of a further example power electronics converter;
**Figure 5** is a schematic diagram of an example power electronics converter during a fault condition;
**Figure 6** is a schematic diagram of an example power electronics converter with a solid state circuit breaker in each phase of the converter;
**Figure 7** is a schematic diagram of an example power electronics converter with a solid state circuit breaker in an output arm of the converter;
**Figure 8** is a schematic diagram of an example power electronics converter with a solid state circuit breaker in each phase of the converter and a contactor across a DC output; and

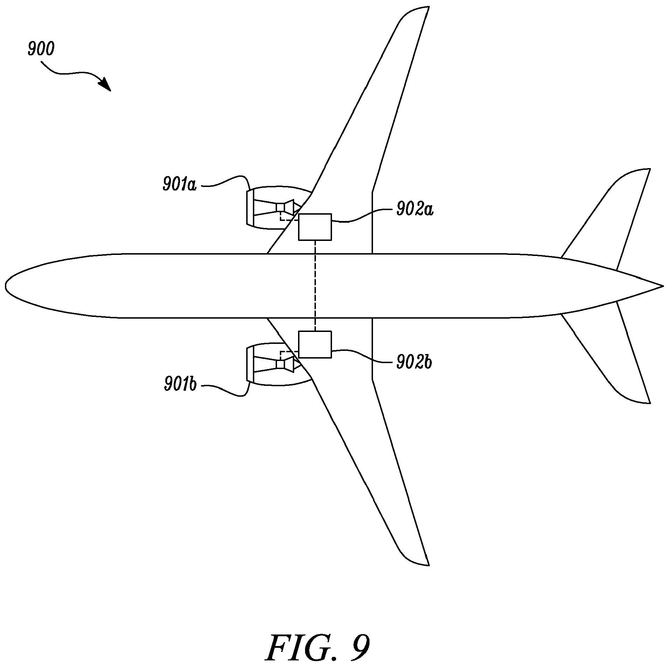

**Figure 9** is a schematic drawing of an example aeroplane incorporating an electrical power system.

### DETAILED DESCRIPTION

### Figure 1

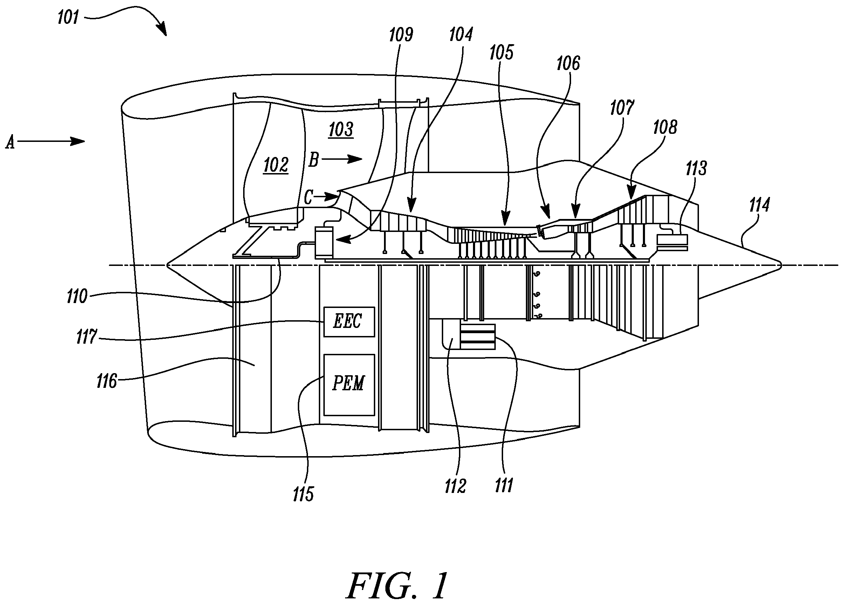

A general arrangement of an engine 101 for an aircraft is shown in Figure 1. The engine 101 is of turbofan configuration, and thus comprises a ducted fan 102 that receives intake air A and generates two pressurised airflows: a bypass flow B which passes axially through a bypass duct 103 and a core flow C which enters a core gas turbine.

The core gas turbine comprises, in axial flow series, a low-pressure compressor 104, a high-pressure compressor 105, a combustor 106, a high-pressure turbine 107, and a low-pressure turbine 108.

In operation, the core flow C is compressed by the low-pressure compressor 104 and is then directed into the high-pressure compressor 105 where further compression takes place. The compressed air exhausted from the high-pressure compressor 105 is directed into the combustor 106 where it is mixed with fuel and the mixture is combusted. The resultant hot combustion products then expand through, and thereby drive, the high-pressure turbine 107 and in turn the low-pressure turbine 108 before being exhausted to provide a small proportion of the overall thrust.

The high-pressure turbine 107 drives the high-pressure compressor 105 via an interconnecting shaft. The low-pressure turbine 108 drives the low-pressure compressor 104 via another interconnecting shaft. Together, the high-pressure compressor 105, high-pressure turbine 107, and associated interconnecting shaft form part of a high-pressure spool of the engine 101. Similarly, the low-pressure compressor 104, low-pressure turbine 108, and associated interconnecting shaft form part of a low-pressure spool of the engine 101. Such nomenclature will be familiar to those skilled in the art. Those skilled in the art will also appreciate that whilst the illustrated engine has two spools, other gas turbine engines have a different number of spools, e.g., three spools.

The fan 102 is driven by the low-pressure turbine 108 via a reduction gearbox in the form of a planetary-configuration epicyclic gearbox 109. Thus in this configuration, the low-pressure turbine 108 is connected with a sun gear of the gearbox 109. The sun gear is meshed with a plurality of planet gears located in a rotating carrier, which planet gears are in turn meshed with a static ring gear. The rotating carrier drives the fan 102 via a fan shaft 110. It will be appreciated that in alternative embodiments a star-configuration epicyclic gearbox (in which the planet carrier is static and the ring gear rotates and provides the output) may be used instead, and indeed that the gearbox 109 may be omitted entirely so that the fan 102 is driven directly by the low-pressure turbine 108.

It is increasingly desirable to facilitate a greater degree of electrical functionality on the airframe and on the engine. To this end, the engine 101 of Figure 1 comprises one or more rotary electrical machines, generally capable of operating both as a motor and as a generator. The number and arrangement of the rotary electrical machines will depend to some extent on the desired functionality. Some embodiments of the engine 101 include a single rotary electrical machine 111 driven by the high-pressure spool, for example by a core-mounted accessory drive 112 of conventional configuration. Such a configuration facilitates the generation of electrical power for the engine and the aircraft and the driving of the high-pressure spool to facilitate starting of the engine in place of an air turbine starter. Other embodiments, including the one shown in Figure 1, comprise both a first rotary electrical machine 111 coupled with the high pressure spool and a second rotary electrical machine 113 coupled with the low pressure spool. In addition to generating electrical power and the starting the engine 101, having both first and second rotary machines 111, 113, connected by power electronics, can facilitate the transfer of mechanical power between the high and lower pressure spools to improve operability, fuel consumption etc.

As mentioned above, in Figure 1 the first rotary electrical machine 111 is driven by the high-pressure spool by a core-mounted accessory drive 112 of conventional configuration. In alternative embodiments, the first electrical machine 111 may be mounted coaxially with the turbomachinery in the engine 101. For example, the first electrical machine 111 may be mounted axially in line with the duct between the low- and high-pressure compressors 104 and 105. In Figure 1, the second electrical machine 113 is mounted in the tail cone 114 of the engine 101 coaxially with the turbomachinery and is coupled to the low-pressure turbine 108. In alternative embodiments, the second rotary electrical machine 113 may be located axially in line with low-pressure compressor 104, which may adopt a bladed disc or bladed drum configuration to provide space for the second rotary electrical machine 113. It will of course be appreciated by those skilled in the art that any other suitable location for the first and (if present) second electrical machines may be adopted.

The first and second electrical machines 111, 113 are connected with power electronics. Extraction of power from or application of power to the electrical machines is performed by a power electronics module (PEM) 115. In the present embodiment, the PEM 115 is mounted on the fan case 116 of the engine 101, but it will be appreciated that it may be mounted elsewhere such as on the core of the gas turbine, or in the vehicle to which the engine 101 is attached, for example.

Control of the PEM 115 and of the first and second electrical machines 111 and 113 is in the present example performed by an engine electronic controller (EEC) 117. In the present embodiment the EEC 117 is a full-authority digital engine controller (FADEC), the configuration of which will be known and understood by those skilled in the art. It therefore controls all aspects of the engine 101, i.e. both of the core gas turbine and the first and second electrical machines 111 and 113. In this way, the EEC 117 may holistically respond to both thrust demand and electrical power demand.

The one or more rotary electrical machines 111, 113 and the power electronics 115 may be configured to output to or receive electric power from one, two or more dc busses. The dc busses allow for the distribution of electrical power to other engine electrical loads and to electrical loads on the airframe.

Those skilled in the art will appreciate that the gas turbine engine 101 described above may be regarded as a 'more electric' gas turbine engine because of the increased role of the electrical machines 111, 113 compared with those of conventional gas turbines.

### Figures 2A and 2B

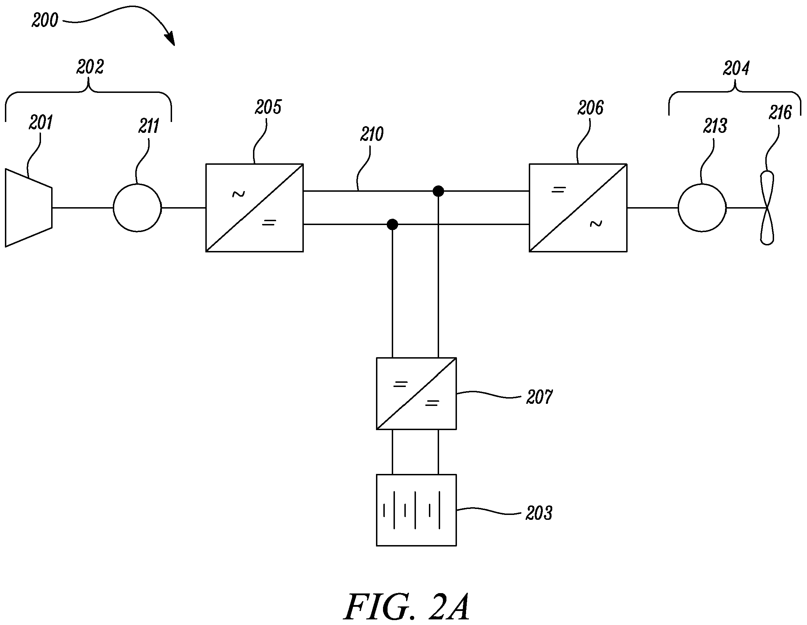

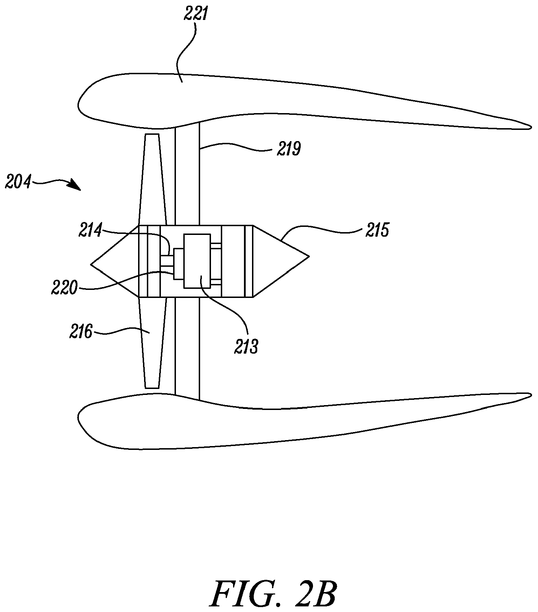

Figure 2A illustrates an exemplary propulsion system 200 of a hybrid electric aircraft. The propulsion system 200 includes a generator set 202 comprising a gas turbine engine 201 and electrical generator 211, and a battery pack 203. Both the generator set 202 and the battery pack 203 are used as energy sources to power a motor-driven propulsor 204, an example of which is shown in Figure 2B.

The illustrated propulsion system 200 further comprises an AC/DC converter 205, a dc distribution bus 210, a DC/AC converter 206 and a DC/DC converter 207. It will be appreciated that whilst one generator set 202 and one propulsor 204 are illustrated in this example, a propulsion system 200 may include more than one generator set 202 and/or one or more propulsor 204.

A shaft or spool of the engine 201 is coupled to and drives the rotation of a shaft of the generator 211 which thereby produces alternating current. The AC/DC converter 205, which faces the generator 211, converts the alternating current into direct current which is fed to various electrical systems and loads via the dc distribution bus 210. These electrical systems include non-propulsive loads (not shown in Figure 2A) and the motor-driven propulsor 204, which comprises a motor 213 which drives a propulsor 204 via the DC/AC converter 206.

The battery pack 203, which may be made up of a number of battery modules connected in series and/or parallel, is connected to the dc distribution bus 210 via the DC/DC converter 207. The DC/DC converter 207 converts between a voltage of the battery pack 203 and a voltage of the dc distribution bus 210. In this way, the battery pack 203 can replace or supplement the power provided by the generator set 202 (by discharging and thereby feeding the DC distribution bus 210) or can be charged using the power provided by the generator set 202 (by being fed by the dc distribution bus 210).

Referring to Figure 2B, in this example the propulsor 204 takes the form of a ducted fan. The fan 216 is enclosed within a fan duct 219 defined within a nacelle 221 and is mounted to a core nacelle 215. The fan 216 is driven by the electrical machine 213 via a drive shaft 214, both of which may also be thought of as components of the propulsor 204. In this embodiment a gearbox 220 is provided between the electrical machine 213 and the drive shaft 214.

The electrical machine 213 is supplied with electric power from a power source, for example the generator set 202 and/or the battery 203 via the dc bus 210. The electrical machine 213 of the propulsor, and indeed the electrical machine 211 of the generator set 202, may be of any suitable type, for example of the permanent magnet synchronous type.

Those skilled in the art will recognise the propulsion system 200 of Figures 2A-B to be of the series hybrid type. Other hybrid electric propulsion systems are of the parallel type, while still others are of the turboelectric type or have features of more than one type. The configuration of the more electric engine 101 of Figure 1 may be considered similar to a parallel hybrid system, with the main distinction being the roles of the electrical machines. For example, the electrical machines of a more electric engine are generally only used in motor mode to start the engine and to improve engine operability, whereas the electric machines of a parallel hybrid propulsion system are used to motor the spools to meaningfully add to the amount of propulsive thrust produced by the turbomachinery.

### Figure 3

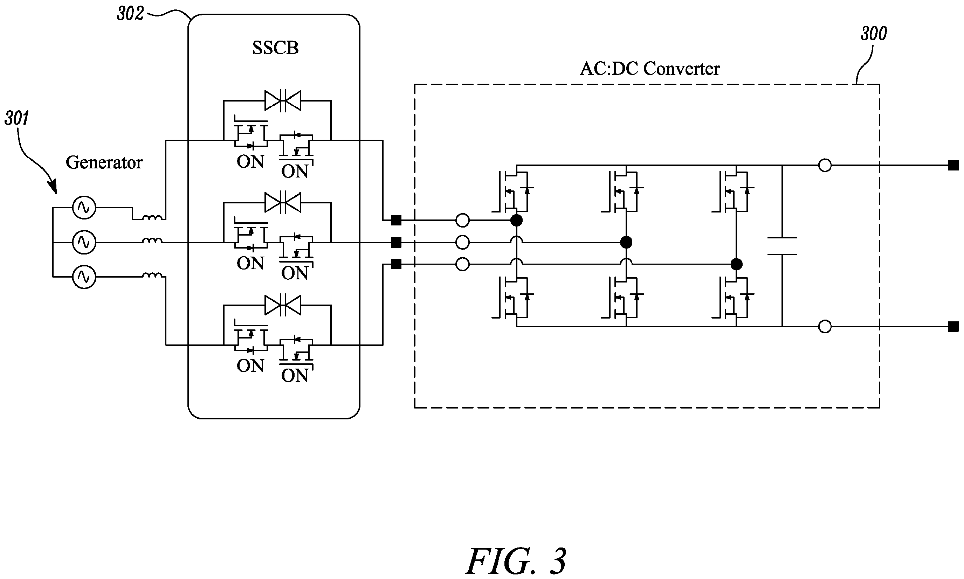

Figure 3 is a schematic diagram illustrating an example power electronics converter 300 connected to an AC supply provided by a generator 301 via an AC side SSCB 302. The SSCB 302 comprises reverse series connected MOSFETs in each phase between the generator 301 and the AC inputs to the converter 300.

In this approach, the generator 301 can be prevented from continuously feeding a fault current, which may occur by virtue of converter uncontrolled diode conduction, by turning off the semiconductors forming the SSCB 302. This approach introduces a very high impedance into each of the three AC lines resulting from the transistor off-state impedance, which stops the flow of current to a fault in the DC network by stopping flow of current to the converter 300.

A problem with this approach is that, particularly for high power applications, conduction losses via the SSCB 302 are significant and continuous during operation of the generator 301 and converter 300.

### Figure 4

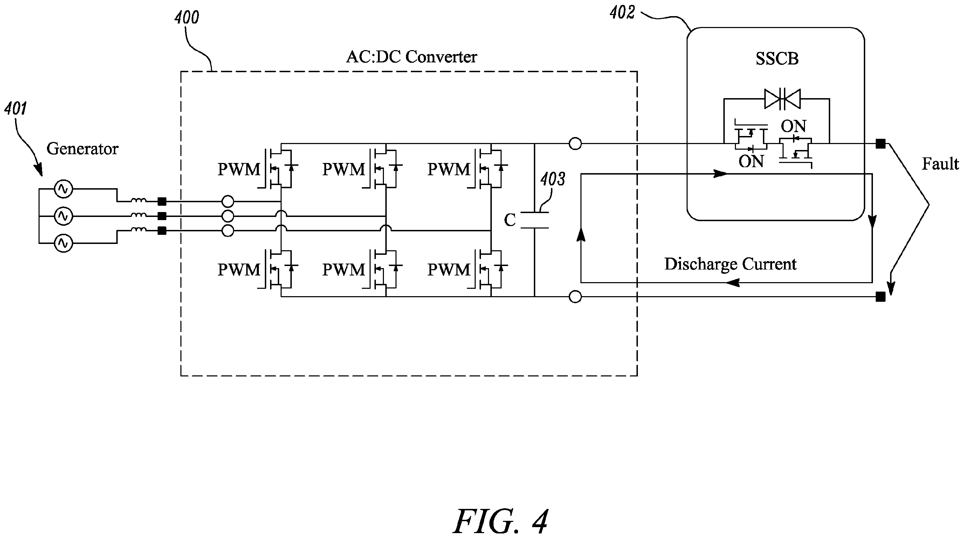

Figure 4 illustrates a second known approach to providing the electrical system with protection against faults in the DC network by adding an SSCB 402 to the DC side of the converter 400.

In many applications, the arrangement shown in Figure 4 can offer a simpler and more optimal solution compared to that shown in Figure 3 because only one, rather than three, bi-directional semiconductor switch is needed in the SSCB 402. This reduces the amount of hardware required and leads to less insertion (conduction) losses in normal operation.

One main disadvantage of using a DC side SSCB 402 is that it experiences a very large discharge current pulse from the converter DC link capacitor 403 during a fault condition, which is normally too high to be safely conducted by the SSCB transistors. This inherently causes the SSCB transistors to turn off almost immediately, typically within a few microseconds, by the autonomous action of the local desaturation protection. This desaturation protection typically resides within the local transistor gate driver circuitry and detects the presence of a device overcurrent when the voltage across the on-state transistor (e.g. the MOSFET drain-source voltage V_{DS}) exceeds a certain threshold, commonly 7-10V. Whilst this provides a safe solution, it means the generator 401 and converter 400 cannot provide any level of fault clearing current, which is often needed to operate downstream protection and provides discrimination such that only the faulty part of the system is disconnected. In some applications, a controlled over-current (for example, 1.5 per-unit) is required for several seconds to enable fault clearing, which is not possible if the SSCB has already tripped within a few microseconds.

In the arrangement of Figure 4 therefore, the DC link capacitor 403 remains charged when the SSCB 402 is in its high impedance (off) state as the de-saturation protection operates before the capacitor 403 has discharged all of the stored energy and may also be continuously "topped-up" from the electrical generator 401 through converter diode conduction.

### Figure 5

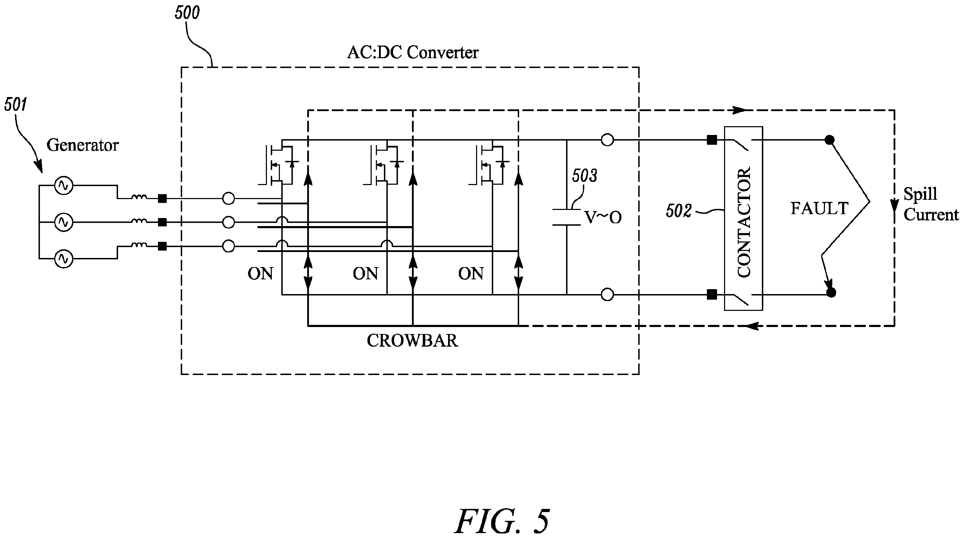

Figure 5 illustrates a further possible approach to providing the electrical system with protection against faults in the DC network.

In this approach, which is described in more detail in EP4170893A1, the converter 500 is temporarily used to connect the three terminals of the generator 501 together during a DC fault, which enables a simple mechanical contactor 502 to open at zero or low DC fault current. The contactor 502 is designed to tolerate the initial high discharge current pulse from the capacitor 503 and safely open afterwards. This approach lends itself to use with a high impedance generator 501 such that the machine impedance limits the maximum magnitude of fault current enabling the converter transistors to safely apply the crowbar short circuit. Furthermore, the converter 500 is able to feed fault current to downstream protection by operating in diode rectifier or synchronous rectifier (or MOSFET reverse conduction) mode and move between crowbar and rectifier modes to provide some control over the fault current provided.

### Figure 6

The bi-directional current carrying and bidirectional voltage blocking requirements of the SSCB approaches shown in Figures 3 and 4 require pairs of series reverse connected transistors. Each pair of transistors may be connected together in a "common-source" connection, i.e. with the source terminals of each MOSFET of the pair being connected together. This requires two additional semiconductors to be connected in the main AC or DC current path, which each dissipate additional power due to conduction losses in normal operation.

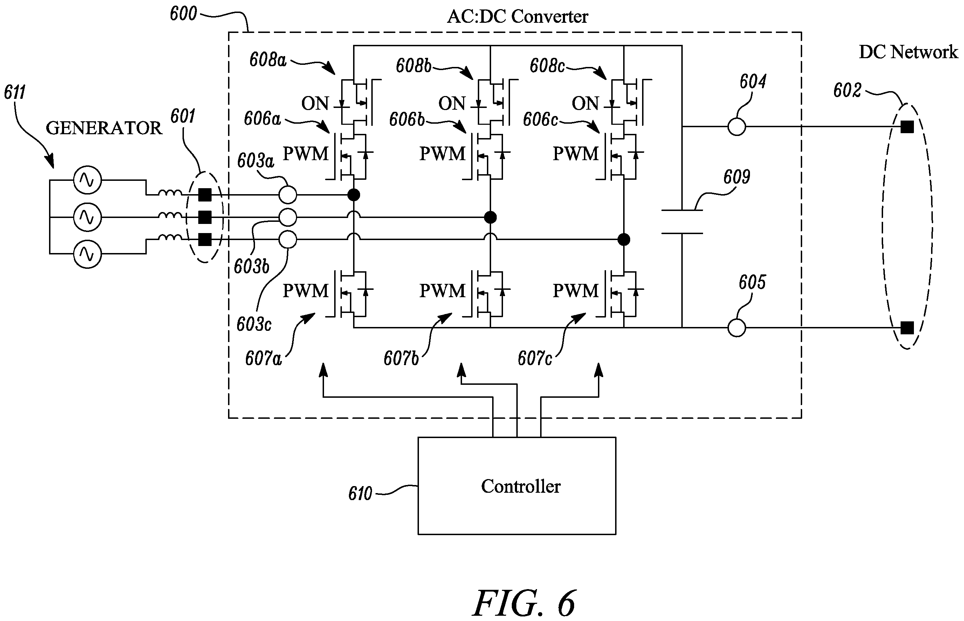

One of the two required transistors for a pair of transistors to form a functioning SSCB is in fact already present in the arms of the AC to DC converter. The arrangement illustrated in Figure 6 adds a second device to each of the three transistor switches of one half of the converter arms. By doing so, this enhanced AC to DC converter 600 can be controlled to stop current flowing from the generator 611 to the DC network 602 during a fault condition.

The power electronics converter 600 in Figure 6 converts an input AC supply 601 having a plurality of phases to an output DC supply 602. The number of phases in the AC supply 601 may vary, but in this example the AC supply 601 comprises three phases. The number of phases may in some alternative examples be greater than three.

The converter 600 comprises a plurality of AC input terminals 603a-c. Each terminal 603a-c is connected to a respective one of the plurality of phases of the AC supply 601.

The converter comprises first and second DC output terminals 604, 605. The first terminal 604 may be a positive terminal and the second terminal a negative or ground terminal. A capacitor 609 is connected between the first and second DC output terminals 604, 605.

A first MOSFET 606a-c is connected between each of the plurality of AC input terminals 603a-c and the first DC output terminal 604.

A second MOSFET 607a-c is connected between each of the plurality of AC input terminals 603a-c and the second DC output terminal 605.

A third MOSFET 608a-c is reverse connected in series with the first MOSFET 606a-c between the DC output terminal 604 and each of the plurality of AC input terminals 603a-c.

The MOSFETs 606a-c, 607a-c, 608a-c may all be of similar type and construction. As shown in Figure 6 and in other examples herein, each MOSFET is illustrated including its associated body diode, as this body diode affects how the converter 600 operates during switching cycles.

A controller 610 provides switching signals to gates of each of the MOSFETs 606a-c, 607a-c, 608a-c. The controller 610 is configured to operate in a first mode in which pulse width modulated (PWM) switching signals are provided to the gates of the first and second MOSFETs 606a-c, 607a-c to convert an AC supply at the AC input terminals 603a-c to a DC output supply at the DC output terminals 604, 605 while the third MOSFETs 608a-c are switched on. The controller 610 is further configured to operate in a second mode during a fault condition in which the first and third MOSFETs 606a-c, 608a-c are switched off. The first and third MOSFETs 606a-c, 608a-c thereby together perform the function of a bidirectional SSCB for each arm of the converter 600. Optionally, the second MOSFETs 607a-c may also be switched off in the second mode to prevent current flowing between the generator 611 and the power converter 600, in a crow-bar like state.

In the example illustrated in Figure 6, the source of each of the first MOSFETs 606a-c is connected to a respective one of the AC input terminals 603a-c. A source of each of the third MOSFETs 608a-c is connected to the first DC output terminal 604 and a drain of each of the third MOSFETs 608a-c is connected to a drain of a respective one of the first MOSFETs 606a-c. In alternative arrangements, the first and third MOSFETs 606a-c, 608a-c may be reversed, i.e. with the sources of each of the first and third MOSFETs connected together, with the drains of the first MOSFETs 606a-c connected to the first DC terminal 604 and the drains of the third MOSFETs 608a-c connected to the respective AC input terminals 603a-c.

Also in Figure 6, a source of each of the second MOSFETs 607a-c is connected to the second DC output terminal 605 and a drain of each of the second MOSFETs 607a-c is connected to a respective one of the AC input terminals 603a-c. In alternative arrangements further fourth MOSFETs (not shown) may be reverse connected in series with the second MOSFETs 607a-c similarly to the first and third MOSFETs 606a-c, 608a-c so that the two sides of each converter arm are balanced.

The arrangement in Figure 6 impacts the power losses and efficiency of the AC to DC converter 600 compared to the arrangements shown in Figures 3 and 4, described above. In terms of conduction losses, the arrangement shown in Figure 3 requires six additional transistors conducting the full AC phase current. The arrangement shown in Figure 4 requires two additional transistors carrying the full DC current. The arrangement shown in Figure 6 requires an additional transistor 608a-c for each phase, but each transistor carries on average only half of the full AC phase current because the AC current splits equally between the upper and lower arms of the converter 600, with each arm conducting for 180 electrical degrees. The converter 600 therefore suffers smaller conduction losses than the arrangement shown in Figure 3. It can also be concluded that the converter suffers smaller conduction losses than the arrangement shown in Figure 4 if we are comparing two additional transistors each conducting I_{DC} against three additional transistors each conducting 0.5 I_{AC}.

During normal operation, the additional transistors 608a-c are not switched on and off at high frequency to apply pulse width modulation type switching patterns but are kept closed. Given there is no additional switching required, the converter 600 does not suffer from an increase in converter switching losses compared to the arrangements shown in Figures 3 and 4.

By integrating the SSCB functionality into the arms of the converter 600, the transistors 608a-c responsible for stopping fault current flow do not experience the large pulse of current from the DC link capacitor, which is the case in the example illustrated in Figure 4. As such, the transistor de-saturation protection does not immediately operate, thereby allowing the converter 600 and generator 611 to remain connected providing fault clearing current as required.

The strategy of applying a converter 'crowbar', illustrated in Figure 5, is imperfect in some applications as a fraction of the fault current can spill to the DC fault site. This occurs when the voltage dropped across the conducting transistors (e.g.in the lower half of the converter bridge) is high enough to forward bias and turn-on the diodes in the opposite half of the bridge. Such a spill may occur when there is only 2-3V dropped across the conducting transistors, which may result in practice in about 25% of the fault current being directed to the DC fault during the crowbar state. The converter arrangement in Figure 6 is able to stop this spill of DC fault current completely because the current must flow through an off-state transistor and not a diode. This is a further improvement, particularly as interruption by a downstream mechanical contactor can be achieved at a true zero arc-free current condition.

The problem of commutation of the peak capacitor discharge current back to the converter diodes as the DC voltage tries to go negative may also be prevented. This problem and various proposed solutions are disclosed in more detail in US11634034B1.

With the converter 600 of Figure 6, the DC network voltage may be allowed to transiently go negative without the diodes conducting as the additional transistors 608a-c can support negative voltage in their off non-conducting state. This is important in that the need for over-rated converter diodes, or the addition of a separate high-power diode connected across the DC supply, is removed thereby offering savings in converter size, weight and cost.

In operation, the DC capacitor can be allowed to fully discharge its stored energy into the DC network/fault with the converter 600 in its blocked/off state. This will typically happen in a short time period of less than 1ms. Afterwards, the generator 611 and converter 600 are able to operate in a fault current feeding mode to satisfy the requirements of the electrical system protection and discrimination strategy.

The converter 600 as shown in Figure 6 is asymmetric due to the differing number of transistors in the upper and lower arms. The main impact of this is the small voltage dropped across each arm when in conduction is slightly different. This could lead to a small direct component of voltage appearing at the AC terminals 603a-c, which is known to drive magnetic components like rotating generators into saturation. However, this small difference can easily be compensated for by the controller 610, which can adjust the switching pattern to compensate for the small transistor voltage drop differences. Furthermore, the converter 600 can alternatively be designed to use different semiconductor devices with differing characteristics (or even different voltage ratings), such that the on-state voltage drop of the upper and lower arms is nominally the same.

Commercially available common-source COTS power modules are available that may be used in a "Vienna" rectifier for providing the upper arm reverse-series transistor arrangement of Figure 6. An example is the MSCSM120VR1M062CT6AG Vienna Rectifier SiC MOSFET Power Module, available from Microchip Technology Inc.

An approach to power electronic converter design and manufacture uses the PCB packaging of specially selected semiconductor die and aims to fully exploit the advantages of wide band gap devices built from Silicon Carbide (SiC) and Gallium Nitride (GaN). This approach enables bespoke designs of converter to be realised that may incorporate the converter 600 arrangement described above. This approach involves each power semiconductor of the converter, including those making up the phase arms and, in this case, SSCBs being embedded in a solid insulation material (e.g., FR4). These building blocks are known as "prepackages". The circuit is assembled by attaching these prepackages to an underside of a PCB or other carrier substrate. The electrical connections between the power semiconductors are made by the metallic layers of the PCB and by filled holes/vias that connect the layers and connect the semiconductor terminals to layers. The resulting arrangement has much lower parasitic inductance than COTS power modules, resulting in lower losses and a higher power density. This approach is modular, enabling different circuits to be built from pre-packaged units. The converters described herein may be created using this approach. Further details of this approach are provided in US11634034B1.

### Figure 7

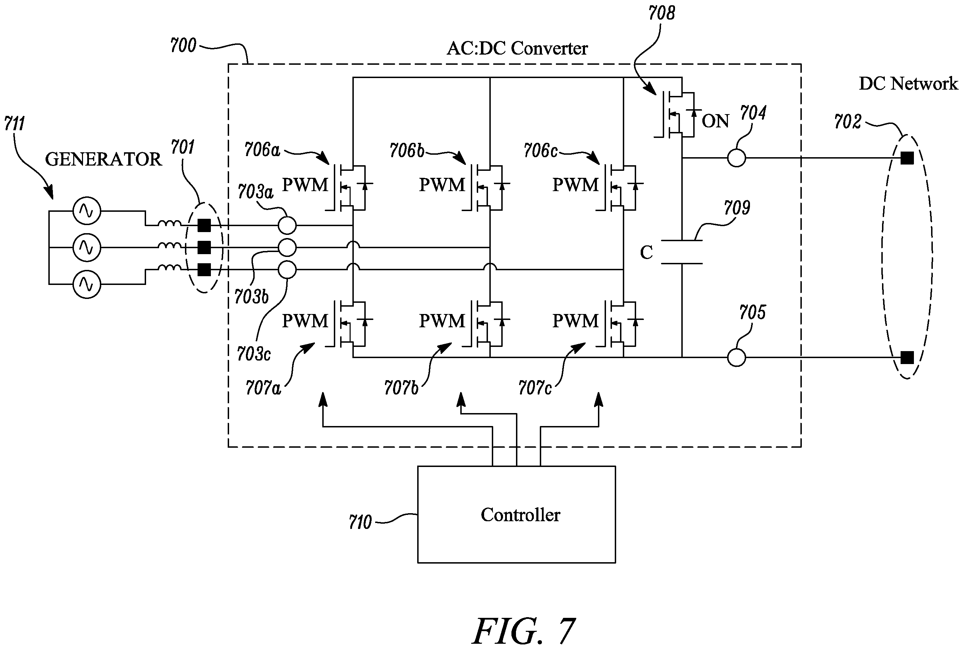

Figure 7 illustrates an alternative example, in which one additional MOSFET is connected between the first DC output terminal and each of the first MOSFETs. As with the converter of Figure 6, the converter 700 converts an input AC supply 701 having a plurality of phases to an output DC supply 702. The converter 700 comprises a plurality of AC input terminals 703a-c connected to the plurality of phases of the input AC supply 701. The converter 700 shares similar advantages of the converter 600 shown in Figure 6.

The converter 700 comprises first and second DC output terminals 704, 705, with a capacitor 709 connected between the first and second DC output terminals 704, 705 .

A first MOSFET 706a-c is connected between each of the plurality of AC input terminals 703a-c and the first DC output terminal 704.

A second MOSFET 707a-c is connected between each of the plurality of AC input terminals 703a-c and the second DC output terminal 705.

A third MOSFET 708 is connected between the first DC output terminal and in reverse series with each of the first MOSFETs 706a-c.

Rather than using three additional reverse blocking MOSFETs, a single reverse blocking MOSFET 708 is used. This additional device carries the combined current from the three upper arms switching MOSFETs 706a-c (i.e. three half sinusoidal pulses) and has a higher current rating than each of the reverse blocking MOSFETs 608a-c shown in Figure 6. This transistor 708 sits directly between the DC capacitor and PWM switching MOSFETs. Circuit layouts that minimise the amount of additional stray inductance are important. If shown to be problematic and introduction of voltage transients (due to V =L x di/dt), small amounts of additional capacitance could be added to the converter circuit to reduce the semiconductor switching voltage stresses.

As with the example of Figure 6, a controller 710 provides switching signals to gates of each of the MOSFETs 706a-c, 707a-c, 708. The controller 710 is configured to operate in a first mode in which pulse width modulated (PWM) switching signals are provided to the gates of the first and second MOSFETs 706a-c, 707a-c to convert an AC supply at the AC input terminals 703a-c to a DC output supply at the DC output terminals 704, 705 while the third MOSFET 708 is switched on. The controller 710 is further configured to operate in a second mode during a fault condition in which the first and third MOSFETs 706a-c, 708 are switched off. The first and third MOSFETs 706a-c, 708 thereby together perform the function of a bidirectional SSCB for each arm of the converter 700.

### Figure 8

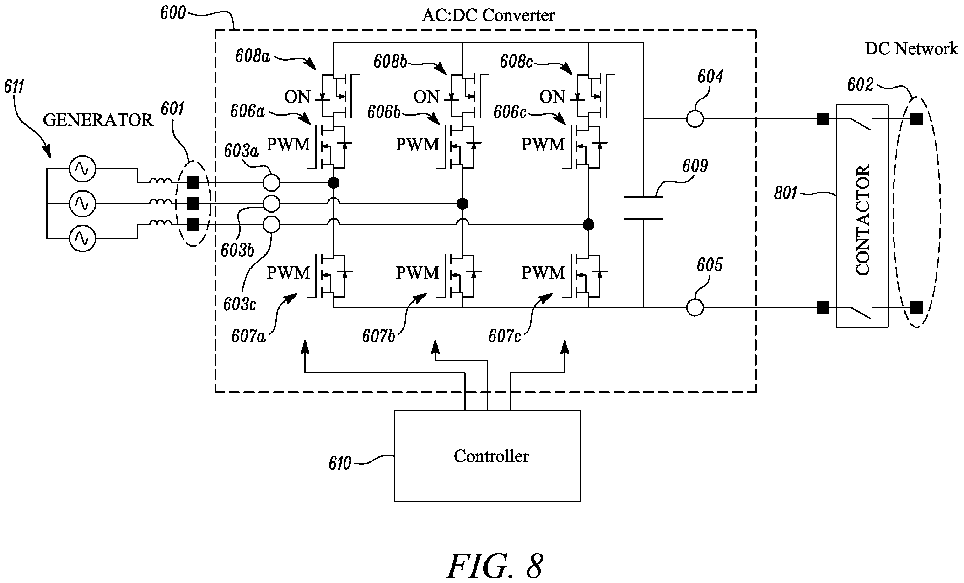

Figure 8 illustrates a further example in which a mechanical contactor 801 is added across the DC network, the contactor 801 configured to connect the first and second DC output terminals 604, 605 to the DC network. This arrangement provides all the advantages of the converter described above in relation to Figure 6 but also has the contactor 801 to provides true Galvanic isolation by virtue of the physical break created by open mechanical contacts.

In this arrangement there are a number of options that may be used during abnormal conditions including fault current extinction by turning off all transistors, which also prevents DC capacitor re-charge and ideal fault current containment (i.e. no spill) by switching on the three lower transistors 607a-c, which enables the mechanical contactor 801 to be opened with zero current providing arc free extinction. Importantly, this arrangement provides both a primary and back-up protection means, with the primary protection using control of the transistors 606a-c, 607a-c, 608a-c and the back up protection using the mechanical contactor 801 if the control option fails.

In both Figure 6 and Figure 8, the three additional reverse connected transistors 608a-c are connected in the upper arms of the converter 600. It is understood that the same functionality can be achieved when the three additional reverse connected transistors are connected in the lower arms.

Similarly, the additional reverse blocking transistor 708 shown in Figure 7 could be moved to the lower DC capacitor and converter connection point.

It is also possible to add reverse connected transistors to all six arms of the converter 600 to form a symmetrical converter, although this will suffers higher conduction losses. Similarly, two reverse blocking transistors could be added to the converter 700 of Figure 7 at the positive and negative terminals of the DC capacitor 709 to maintain symmetry, but again increasing conduction losses.

### Advantages

The power electronics converters described herein may have one or more of the following advantages.

SSCB functionality is added into the AC to DC converter. This offers size, weight, cost, efficiency and reliability advantages over the use of a separate converter and SSCB connected in either the AC or DC lines.

The converter is able to provide sustained fault clearing current to operate downstream protection, which is not possible when a discrete DC side SSCB is used. This is possible because the transistors providing the DC fault blocking capability do not experience the large DC capacitor discharge current pulse.

The converter prevents the spill of current to the fault site when the converter crowbar (or short circuit) state is used. As such, downstream protection can operate with zero current and arc-free interruption.

The converter prevents the commutation of the high pulse of capacitor discharge current to the converter diodes. This means lower current rated diodes may be used and/or the need for an additional diode connected across the DC capacitor is removed.

The converter can be supplemented with the use of a simple mechanical contactor to provide independent primary and back-up protection.

Asymmetries in the design of the converter are easily compensated for by careful design/choice of the semiconductor devices and by control action.

The converter may be built using COTS power modules, which may include SiC based devices connected in a common-source configuration, as used for example in the Vienna Rectifier described above.

The converter may be built using the flexible approach described in US11634034B1.

### Figure 9

As described above, the electrical power system described herein may be part of an aircraft power and propulsion system. The aircraft 900 comprises gas turbine engines 901a, 901b, one or both of which may comprise or be connected to an electrical power system 902a, 902b of the type as described above. Each of the gas turbine engines 901a, 901b may be as described above in relation to Figure 1. The aircraft 900 may be a hybrid electric aircraft.

Various examples have been described, each of which feature various combinations of features. It will be appreciated by those skilled in the art that, except where clearly mutually exclusive, any of the features may be employed separately or in combination with any other features and the invention extends to and includes all combinations and sub-combinations of one or more features described herein.

It will also be appreciated that whilst the invention has been described with reference to aircraft and aircraft propulsion systems, the electric machine drive techniques described herein could be used for many other applications. These include, but are not limited to, automotive, marine and land-based applications.

Other embodiments are within the scope of the invention, which is defined by the appended claims.

## Claims

1. A power electronics converter (600) for converting an input AC supply (601) having a plurality of phases to an output DC supply (602), the converter comprising:
a plurality of AC input terminals (603a-c) connectable to the plurality of phases of the AC supply (601);
first and second DC output terminals (604, 605);
a capacitor (609) connected between the first and second DC output terminals (604, 605);
a first MOSFET (606a-c) connected between each of the plurality of AC input terminals (603a-c) and the first DC output terminal (604);
a second MOSFET (607a-c) connected between each of the plurality of AC input terminals (603a-c) and the second DC output terminal (605);
a third MOSFET (608a-c) reverse connected in series with the first MOSFET (606a-c) between the first DC output terminal (604) and each of the plurality of AC input terminals (603a-c); and
a switching controller (610) configured to provide switching signals to gates of each of the first, second and third MOSFETs (606a-c, 607a-c, 608a-c),
wherein the controller (610) is configured to operate in a first mode in which pulse width modulated switching signals are provided to the gates of the first and second MOSFETs (606a-c, 607a-c) to convert an AC supply at the AC input terminals (603a-c) to a DC output supply at the DC output terminals (604, 605) while the third MOSFETs (608a-c) are switched on,
wherein the controller (610) is configured to operate in a second mode during a fault condition in which the first and third MOSFETs (606a-c, 608a-c) are switched off.

2. The power converter (600) of claim 1, wherein the second MOSFETs (607a-c) are also switched off in the second mode.

3. The power electronics converter (600) of any preceding claim, wherein a source of each of the first MOSFETs (606a-c) is connected to a respective one of the AC input terminals (603a-c).

4. The power electronics converter (600) of any preceding claim, wherein a source of each of the second MOSFETs (607a-c) is connected to the second DC output terminal (605) and a drain of each of the second MOSFETs (607a-c) is connected to a respective one of the AC input terminals (603a-c).

5. The power electronics converter (600) of any preceding claim, wherein a source of each of the third MOSFETs (608a-c) is connected to the first DC output terminal (604) and a drain of each of the third MOSFETs (608a-c) is connected to a drain of a respective one of the first MOSFETs (606a-c).

6. The power electronics converter (600) of any preceding claim, further comprising:
a fourth MOSFET reverse connected in series with the second MOSFET (607a-c) between the second DC output terminal (605) and each of the plurality of AC input terminals (603a-c).

7. A power electronics converter (700) for converting an input AC supply (701) having a plurality of phases to an output DC supply (702), the converter (700) comprising:
a plurality of AC input terminals (703a-c) connectable to the plurality of phases of the input AC supply (701);
first and second DC output terminals (704, 705);
a capacitor (709) connected between the first and second DC output terminals (704, 705);
a first MOSFET (706a-c) connected between each of the plurality of AC input terminals (703a-c) and the first DC output terminal (704);
a second MOSFET (707a-c) connected between each of the plurality of AC input terminals (703a-c) and the second DC output terminal (705);
a third MOSFET (708) connected between the first DC output terminal (704) and in reverse series with each of the first MOSFETs (706a-c), the third MOSFET (708) located between the capacitor (709) and the first MOSFETs (706a-c)
a switching controller (710) configured to provide switching signals to gates of each of the first, second and third MOSFETs (706a-c, 707a-c, 708),
wherein the controller (710) is configured to operate in a first mode in which pulse width modulated switching signals are provided to the gates of the first and second MOSFETs (606a-c, 607a-c) to convert an AC supply at the AC input terminals (703a-c) to a DC output supply at the DC output terminals (704, 705) while the third MOSFET (708) is switched on,
wherein the controller (710) is configured to operate in a second mode during a fault condition in which the first and third MOSFETs (706a-c, 708) are switched off.

8. The power electronics converter (700) of claim 7, wherein a source of each of the first MOSFETs (706a-c) is connected to a respective one of the AC input terminals (703a-c).

9. The power electronics converter (700) of claim 7 or claim 8, wherein a source of each of the second MOSFETs (707a-c) is connected to the second DC output terminal (705) and a drain of each of the second MOSFETs (707a-c) is connected to a respective one of the AC input terminals (703a-c).

10. The power electronics converter (700) of any one of claims 7 to 9, wherein a source of the third MOSFET (708) is connected to the first DC output terminal (704) and a drain of third MOSFET (708) is connected to drains of the first MOSFETs (706a-c).

11. The power electronics converter (600, 700) of any preceding claim, wherein the AC supply (601, 701) comprises three or more phases.

12. The power electronics converter (600, 700) of any preceding claim, wherein the first MOSFET, second MOSFET and third MOSFET are SiC MOSFETs or GaN MOSFETs.

13. An electrical power system comprising:
an electrical machine (211, 611, 711) having a plurality of phases;
a power electronics converter (205, 600, 700) according to any one of claims 1 to 12, the plurality of AC input terminals (603a-c) of which are connected to the plurality of phases of the electrical machine (211, 611, 711).

14. An aircraft power and propulsion system (200) comprising:
a gas turbine engine (201); and
an electrical power system comprising an electrical machine (211, 611, 711) and a power electronics converter (205, 600, 700) according to any one of claims 1 to 12,
wherein the electrical machine (211, 611, 711) of the electrical power system is mechanically coupled with a spool of the gas turbine engine (201).

15. An aircraft (1200) comprising the power and propulsion system (200, 1202a, 1202b) of claim 14.
